# FASCICULE DE BREVET EUROPEEN

(11) **EP 2 230 480 B1**
(45) Date de publication et mention de la délivrance du brevet: **13.01.2016**
(21) Numéro de dépôt: 10153149.9
(22) Date de dépôt: 10.02.2010
(51) Int. Cl.: G01B 3/02, G01B 1/00, G01B 3/04

(54) **Article de traçage avec graduation et/ou motifs imprimés**
Markierungsvorrichtung mit Skala und/oder Druckmuster
Scribing article with graduation and/or printed patterns

(30) Priorité: 13.02.2009 FR 0900670
(43) Date de publication de la demande: 22.09.2010
(73) Titulaire: MAPED, 74370 Argonay (FR)
(72) Inventeur: Bardet, Jean, 74330 Choisy (FR); Dufournet, François, 74600 Seynod (FR)
(74) Mandataire: Chevalier, Renaud Philippe

(56) Documents cités:
- GB-A- 659 492
- US-A- 5 666 737
- US-B1- 7 032 534

## Description

La présente invention se rapporte aux articles de traçage, tels que règle, équerre ou rapporteur, essentiellement réalisés en matière synthétique, et comportant des éléments imprimés tels que graduation et/ou motifs à caractère décoratif, publicitaire ou autre. De tels articles de traçage sont utilisables dans le milieu scolaire, dans le milieu professionnel ou dans tout autre contexte. Le but général de l'invention est de fournir des articles de traçage, du genre ici concerné, dont les graduations et/ou autres motifs imprimés possèdent un caractère permanent, non effaçable, tout en gardant une grande netteté et précision des graduations et/ou motifs.

Les techniques les plus utilisées à ce jour, pour la réalisation d'articles de traçage avec graduations et/ou motifs, consistent en un dépôt d'encre sur la face inférieure ou sur la face supérieure de l'article de traçage. Dans le cas d'articles de traçage transparents, l'encre est déposée sur la face inférieure, pour limiter les effets optiques perturbateurs de « loupe » et de distorsion. Dans le cas d'articles de traçage opaques, l'encre est, bien entendu, déposée sur la face supérieure pour que les graduations et/ou motifs soient lisibles.

Les techniques d'impression ici utilisées appartiennent, principalement, aux trois catégories précisées ci-après :
Une première catégorie, incluant les techniques de sérigraphie et de tampographie, donne un résultat relativement précis mais elle impose une grande minutie dans l'application de l'encre, et chaque couleur nécessite un nouveau passage d'encre. L'inconvénient majeur de ces techniques est l'usure rapide des graduations et/ou motifs imprimés, que ce soit par frottement sur le papier (en particulier dans le cas où l'encre est déposée sur la face inférieure de l'article) ou par frottement ou choc contre d'autres articles ou objets, notamment lorsque l'article de traçage considéré est rangé et transporté dans un cartable ou un sac.
Une deuxième catégorie est le marquage à chaud, par des techniques réalisant un transfert à chaud de l'encre vers l'article de traçage, avec une attaque de la surface de la matière synthétique constitutive de cet article. Ce genre de techniques procure une meilleure tenue dans le temps de l'encre, « incrustée » dans la matière de l'article. Toutefois, ces techniques imposent elles aussi un passage d'encre pour chaque couleur. De plus, le moyen tel que film qui supporte initialement l'encre à transférer est relativement onéreux, et le plus souvent ces techniques sont limitées à l'impression par transfert des seules graduations. Le document de brevet US 7032534 prévoit l'impression de graduation et motifs par transfert à chaud sur un article de traçage, en utilisant une feuille de support de l'encre qui est retirée après le processus d'impression. Il en résulte que les graduations et motifs restent à la surface de la règle, et ne sont donc pas protégés contre l'abrasion et les autres agressions, si bien que ces graduations et motifs sont rapidement dégradés ou même effacés.
Une troisième catégorie comprend des techniques d'impression qui réalisent un marquage pratiquement inaltérable dans le temps, ces techniques étant notamment la gravure chimique et la gravure par laser. Toutefois ces techniques sont limitées en nombre de couleurs, donc en variété et richesse des motifs, et elles restent relativement onéreuses.

En raison des inconvénients ou limites des diverses techniques rappelées ci-dessus, des solutions ont été déjà proposées pour protéger les éléments imprimés. Par exemple, il a été envisagé de réaliser des règles en deux parties (dans le sens de leur épaisseur), entre lesquelles est interposée une graduation ou une image. A cet égard, il est fait référence aux documents de brevets GB 659492, EP 0031848, EP 1524127, JP 55158501 et JP 56141501. Dans le cas de certains parmi ces documents, la réalisation reste complexe, soit avec une pièce charnière (EP 0031848) soit en deux pièces (EP 1524127), et elle vise principalement l'insertion d'images ; si des graduations sont aussi à apposer, celles-ci restent réalisées par les techniques, en particulier de sérigraphie et de tampographie, décrites ci-dessus, qui demandent une opération supplémentaire et comportent les inconvénients précédemment exposés. Dans le cas d'autres documents, une graduation se trouve effectivement noyée et protégée dans l'épaisseur de la règle, mais en contrepartie la graduation se situe au milieu de la largeur de la règle et non pas sur son bord, alors qu'il est important que la graduation se trouve au bord de la règle. De plus, les diverses techniques connues ne permettent pas d'avoir la graduation et les autres motifs sur le même support et, plus particulièrement, dans le même plan.

Le document US 7 032 534 B1 décrit un article de traçage avec les caractéristiques du préambule de la revendication 1.

La présente invention vise à résoudre l'ensemble des problèmes évoqués ci-dessus, et elle a donc pour but de fournir des modes de réalisation nouveaux d'un article de traçage avec graduation et/ou motifs imprimés, ici encore réalisé à base de matière synthétique, et pouvant recevoir :
- une graduation bien lisible et non effaçable, qui peut être réalisée en une ou plusieurs couleurs, et/ou
- des motifs imprimés en une ou plusieurs couleurs,
ceci d'une manière économique et garantissant la précision de la graduation et/ou des motifs.

A cet effet, l'invention a pour objet un article de traçage, tel que règle, équerre ou rapporteur, essentiellement réalisé en matière synthétique, et comportant des éléments imprimés tels que graduation et/ou motifs à caractère décoratif, publicitaire ou autre, cet article de traçage étant caractérisé par le fait qu'il comprend, rapportée de façon permanente sur au moins une partie d'une face ou des deux faces, respectivement supérieure et inférieure d'une plaque de base rigide en matière synthétique, une feuille en matière synthétique qui est imprimée avec au moins une graduation et/ou au moins un motif soit sur sa face interne, en contact avec la face supérieure ou inférieure de la plaque de base, soit sur sa face externe au contact d'un élément protecteur permanent.

Dans un premier mode de réalisation de l'article de traçage objet de l'invention, la graduation et/ou le motif est imprimé sur la face interne de la feuille en matière synthétique, dont la face externe non imprimée se situe en surface de l'article de traçage. L'encre de la graduation et/ou des motifs se trouve ainsi protégée contre les agressions extérieures, par son « emprisonnement » entre la plaque et la feuille rapportée sur cette plaque.

Dans le cas d'une plaque de base en matière transparente, la feuille imprimée est avantageusement rapportée contre la face inférieure de la plaque de base. Dans le cas d'une plaque de base en matière opaque, la feuille imprimée doit être rapportée contre la face supérieure de la plaque de base .

Avantageusement, la feuille imprimée est réalisée dans une matière synthétique de même nature chimique que la matière de la plaque de base, sur laquelle elle est rapportée. Ceci facilite l'adhésion de la feuille imprimée sur la face supérieure ou inférieure de la plaque de base, du moins si la surface imprimée donc revêtue d'encre ne représente pas plus d'une certaine fraction limitée, typiquement inférieure à environ 20% de la surface totale de la feuille.

Dans le cas contraire, c'est-à-dire si la surface imprimée représente une fraction relativement importante (typiquement supérieure à 20%) de la surface totale de la feuille, la présence de l'encre peut s'opposer à une bonne adhésion entre la feuille et la plaque de base, car le contact principal pour l'adhésion se fait entre la matière synthétique de la feuille et la plaque, alors que l'encre d'impression de la feuille n'est pas nécessairement compatible avec la matière synthétique de la plaque de base.

Pour éviter cette difficulté, il est possible d'ajouter une couche de vernis compatibilisant, entre la face interne imprimée de la feuille et la face supérieure ou inférieure de la plaque de base. La couche de vernis compatibilisant, déposée sur l'impression telle que graduation ou motif de la feuille, garantit une adhésion forte et définitive entre la feuille et la plaque de base de l'article de traçage, quelle que soit l'importance de la surface encrée.

De plus, cette couche de vernis compatibilisant permet d'utiliser aussi des matières synthétiques de nature chimique différente, pour la feuille imprimée d'une part et la plaque d'autre part. Le recours à ce moyen a donc l'avantage de permettre l'utilisation d'une première matière synthétique, choisie pour ses caractéristiques telles que transparence ou résistance mécanique, pour la plaque de base de l'article de traçage, et d'une matière synthétique différente pour la feuille, matière qui peut être choisie selon d'autres critères tels que coût, facilité d'approvisionnement, souplesse, aptitude à être imprimée, critères auxquels ne satisfait pas nécessairement la matière synthétique de la plaque.

Dans un second mode de réalisation de l'article de traçage objet de l'invention, la graduation et/ou le motif est imprimé sur la face externe de la feuille en matière synthétique, la face externe imprimée de cette feuille étant recouverte d'un film protecteur en matière synthétique, d'épaisseur inférieure à celle de ladite feuille.

Ainsi, dans cet autre mode de réalisation, l'encre d'impression de la graduation ou des motifs se trouve « emprisonnée » d'une matière définitive entre d'une part la face externe de la feuille directement appliquée contre la plaque de base, et d'autre part la face interne du film protecteur, lequel peut être appliqué extérieurement notamment par une technique de pelliculage. Ce film protecteur n'est pas nécessairement de même nature chimique la feuille, ce qui permet de combiner une feuille en matière synthétique, possédant certaines propriétés pour son adhésion à la matière synthétique de la plaque, avec un film qui aurait des caractéristiques spécifiques de résistance à l'abrasion et de transparence.

Dans tous les modes de réalisation de cet article de traçage, la feuille imprimée avec la graduation et/ou les motifs peut être réunie de façon permanente à la plaque de base par une technique de surmoulage, en s'inspirant notamment des procédés connus de surmoulage d'étiquettes (la feuille imprimée jouant ici le rôle de l'étiquette). La graduation et/ou les motifs sont eux-mêmes imprimés sur cette feuille par des techniques connues, telles que l'impression « offset », en une ou plusieurs couleurs, ce type d'impression permettant une grande variété de couleurs et de motifs en utilisant notamment les possibilités de la quadrichromie.

La réalisation de cet article de traçage avec des matières synthétiques de même nature chimique, pour la plaque de base et pour la feuille imprimée, est avantageuse non seulement du point de vue de l'adhésion dans l'opération du surmoulage, mais aussi sous l'aspect du recyclage, l'article de traçage pouvant dans ce cas être recyclé entièrement sans séparation préalable de ses constituants.

Par matières synthétiques « de même nature chimique », on doit comprendre ici soit des matières synthétiques identiques, soit au minimum des matières synthétiques chimiquement compatibles. L'article de traçage objet de l'invention est notamment réalisable en polystyrène, en polypropylène ou en polycarbonate, tant pour la plaque de base que pour la feuille imprimée. La plaque de base est aussi réalisable en méthacrylate de méthyle polymère.

L'encre utilisée pour l'impression de la graduation et/ou des motifs, est avantageusement une encre non « solvantée » et apte à être séchée par polymérisation sous rayonnement ultra-violet. Ce type d'encre est particulièrement adapté pour une impression sur des matériaux peu poreux, ce qui est le cas des feuilles utilisées pour le procédé de surmoulage. De plus, une telle encre séchée par rayonnement ultra-violet donne un film d'encre résistant à l'abrasion, au vieillissement, à la lumière et à l'humidité, garantissant ainsi la pérennité de la graduation et/ou des motifs imprimés.

L'invention sera mieux comprise à l'aide de la description qui suit, en référence au dessin schématique annexé représentant, à titre d'exemples, quelques formes d'exécution de cet article de traçage avec graduation et/ou motifs imprimés, et illustrant le mode de fabrication d'un tel article de traçage :
Figure 1 est une vue en perspective d'un article de traçage, ici une règle, conforme à la présente invention ;
Figure 2 est une vue en perspective éclatée de la règle de la figure 1, avec séparation de la plaque de base d'une part et de la feuille imprimée d'autre part ;
Figure 3 est une vue en coupe transversale schématisée d'une telle règle, dans un mode de réalisation ;
Figure 4 est une vue en coupe similaire à la figure 3 et relative à un autre mode de réalisation ;
Figure 5 est une vue en coupe similaire aux précédentes, montrant encore un autre mode de réalisation ;
Figure 6 est une vue en coupe similaire aux précédentes, montrant un dernier mode de réalisation ;
Figure 7 est un diagramme illustrant le procédé de fabrication d'un article de traçage conforme à l'invention.

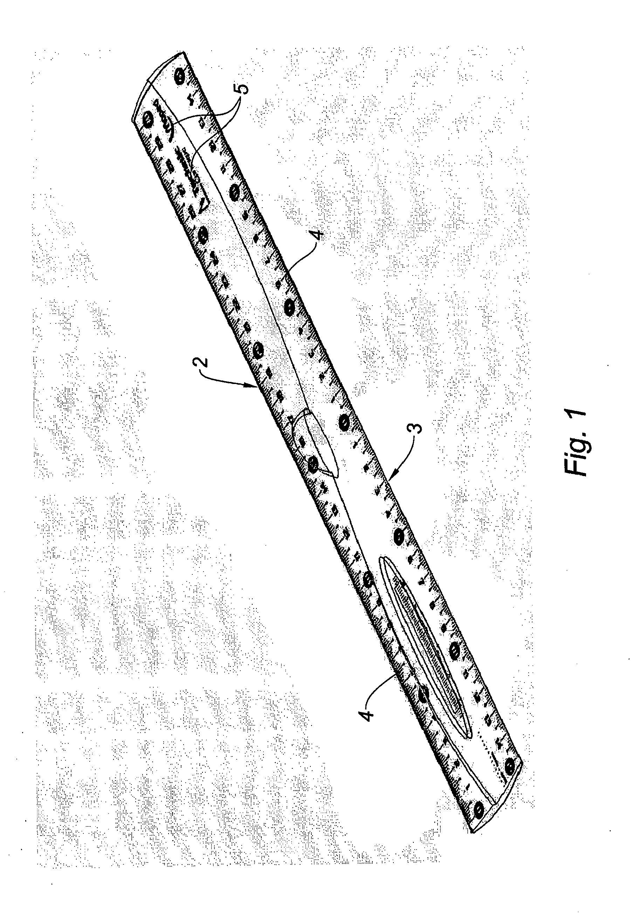

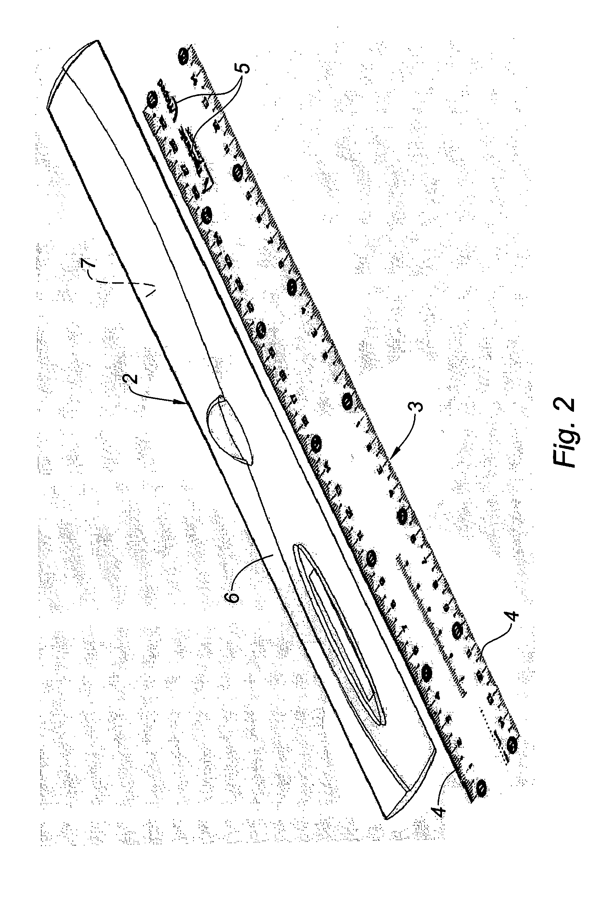

Les figures 1 et 2 représentent un article de traçage, ici une règle graduée, qui se compose essentiellement de deux éléments, à savoir une plaque de base 2 rigide en matière synthétique ici transparente, et une feuille 3 elle aussi en matière synthétique transparente, sur laquelle sont imprimés des graduations 4 et des « motifs », ici des inscriptions 5. En se référant au sens normal d'utilisation de la règle, c'est-à-dire la règle posée à plat de manière à permettre une lecture directe des graduations 4 et des inscriptions 5, on définit la face supérieure 6 et la face inférieure 7 de la plaque de base 2, désignée ci-après plus simplement comme « plaque ».

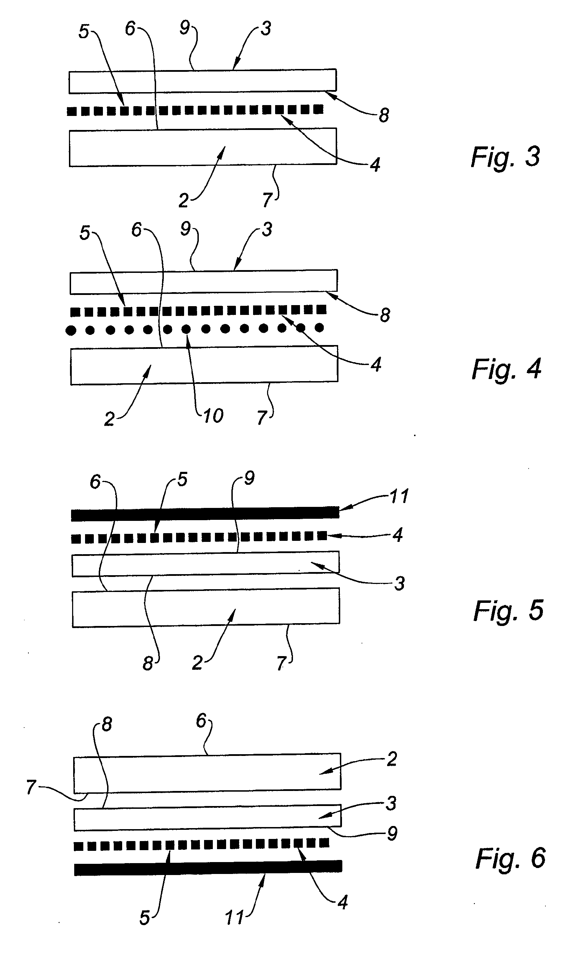

Dans une première série de modes de réalisation (figures 3 à 5), la feuille imprimée 3 est rapportée sur la face supérieure 6 de la plaque 2. On distingue ici la face interne 8 de la feuille 3, appliquée contre la face supérieure 6 de la plaque 2, et la face externe 9 de la feuille 3, située sur le dessus de la règle.

Dans le mode de réalisation selon la figure 3, les graduations 4 et les inscriptions 5, ou autres motifs, sont imprimés sur la face interne 8 de la feuille 3. Cette feuille imprimée 3 est directement fixée, par surmoulage, contre la face supérieure 6 de la plaque 2. La face externe 9 de la feuille 3 forme directement le dessus de la règle.

Dans le mode de réalisation selon la figure 4, qui est une variante du précédent mode de réalisation, les graduations 4 et les inscriptions 5, ou autres motifs, sont encore imprimés sur la face interne 8 de la feuille 3. De plus, une couche de vernis compatibilisant 10 est déposée sur la face interne 9 de la feuille 3, y compris sur la surface encrée de cette face interne 8. Ainsi, la feuille 3 est appliquée et fixée contre la face supérieure 6 de la plaque 2 par l'intermédiaire de la couche de vernis compatibilisant 10, laquelle garantit une bonne adhésion entre la feuille imprimée 3 et la plaque 2.

Au contraire de ce qui précède, dans le mode de réalisation selon la figure 5, les graduations 4 et les inscriptions 5, ou autres motifs, sont imprimés sur la face externe 9 de la feuille 3, elle-même rapportée contre la face supérieure 6 de la plaque 2. Dans un tel cas, la face externe 9 encrée de la feuille 3 est elle-même revêtue d'un film pelliculé 11, en matière synthétique, qui protégera les graduations 4 et inscriptions 5 ou autres motifs, le film 11 formant le dessus de la règle.

Dans les modes de réalisation décrits jusqu'ici, la position « supérieure » des graduations 4 et inscriptions 5, ou autres motifs, est compatible avec une plaque 2 en matière synthétique opaque. La nature de la feuille 3 ou du film pelliculé 11, et/ou la faible épaisseur de ceux-ci, rendent les graduations et motifs visibles par transparence.

La figure 6 montre un mode de réalisation différent, dans lequel la feuille imprimée 3 se situe sous la face inférieure 5 de la plaque 2, ce qui implique une réalisation de cette plaque 2 en matière synthétique transparente. Plus particulièrement, la réalisation est ici « symétrique » de celle de la figure 5 : les graduations 4 et les inscriptions 5, ou autres motifs, sont imprimés sur la face externe 9 de la feuille 3 qui est sa face inférieure, cette feuille 3 étant appliquée par sa face interne 8 contre la face inférieure 7 de plaque 2. Le film pelliculé 11, recouvrant les graduations ou motifs pour les protéger, forme ici le dessous de la règle.

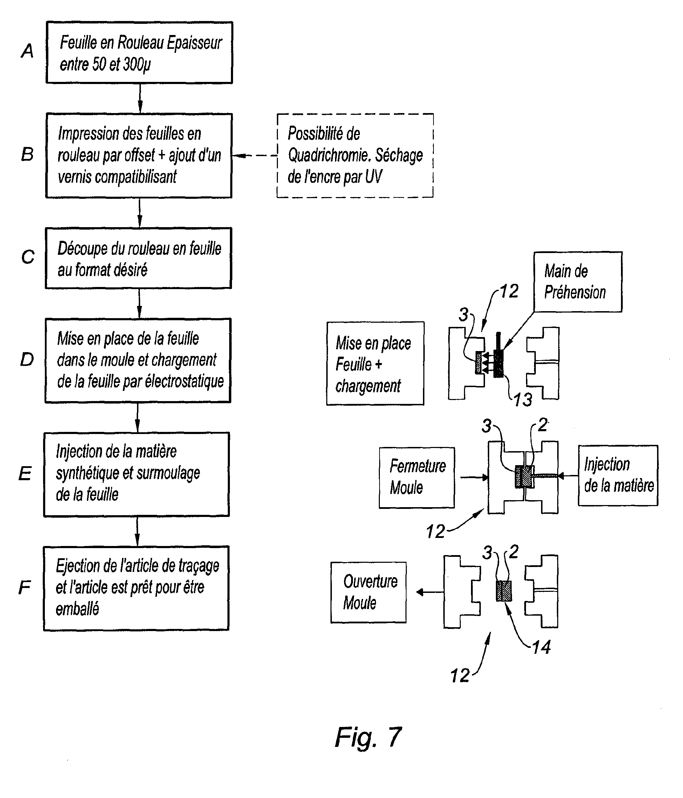

Enfin, en se référant à la figure 7, on décrira le procédé de fabrication de l'article de traçage, tel que règle graduée, objet de l'invention.

Pour obtenir la feuille imprimée 7 constitutive de cet article de traçage, on part ici d'une feuille continue en rouleau, dont l'épaisseur est comprise entre 50 et 300 microns (étape A). On procède alors à l'impression des feuilles en rouleau, par la technique « offset », suivie le cas échéant de l'ajout du vernis compatibilisant (étape B). En particulier, cette impression peut être réalisée en quadrichromie, avec séchage de l'encre par rayonnement ultra-violet.

Ensuite, le rouleau imprimé est découpé en feuilles individuelles au format désiré, et en correspondance avec les graduations et/ou motifs déjà imprimés (étape C). Chaque feuille 3 est alors mise en place dans un moule d'injection 12, la feuille 3 étant chargée en électricité statique pour rester appliquée contre le fond de l'empreinte du moule 12 lors de l'opération consécutive d'injection. L'amenée et le positionnement de la feuille 3 à l'intérieur du moule 12, alors ouvert, sont réalisables manuellement ou de préférence à l'aide d'un robot de manipulation avec une main de préhension 13 (étape D).

Dans la phase suivante (étape E), le moule 12 est fermé par rapprochement de ses deux parties, et il est procédé à l'injection de la matière synthétique constitutive de la plaque 2, au contact de la feuille imprimée 3, de telle sorte que cette feuille 3 se trouve surmoulée.

Enfin, il est procédé à l'ouverture du moule 12 et à l'éjection de l'article de traçage 14 (étape F). Cet article 14 est alors prêt pour être emballé, en vue de son stockage et de sa livraison.

Bien entendu, le procédé précédemment décrit est adaptable selon les spécificités de l'article de traçage 14, par exemple en prévoyant une étape supplémentaire de pelliculage d'un film protecteur sur la feuille 3, après réalisation de l'impression.

On ne s'éloignerait pas du cadre de l'invention, telle que définie dans les revendications annexées :
- en réalisant les constituants de l'article de traçage, essentiellement la plaque de base et la feuille imprimée, et éventuellement le film protecteur, en toutes matières synthétiques appropriées ;
- en appliquant l'invention à des articles de traçage de toute nature et de toutes dimensions : règles de toutes sortes telles que double-décimètre ou triple-décimètre, équerres, rapporteurs, etc, de type scolaire ou professionnel ;
- en appliquant la ou les feuilles imprimées sur tout ou partie de l'étendue de la plaque de base, en particulier sur une fraction seulement de cette étendue dans le cas d'application à des équerres ;
- en réalisant l'article de traçage par tout procédé technique approprié ; en particulier l'impression des graduations et/ou des motifs est réalisable aussi sur une presse du type « feuille à feuille », au lieu d'une presse « offset » rotative, et un mode d'impression autre, par exemple flexographie, permettrait aussi d'obtenir les feuilles imprimées.

## Revendications

1. Article de traçage, tels que règle, équerre ou rapporteur, essentiellement réalisé en matière synthétique, et comportant des éléments imprimés tels que graduation (4) et/ou motifs (5) à caractère décoratif, publicitaire ou autre, **caractérisé en ce qu**'il comprend, rapportée de façon permanente sur au moins une partie d'une face ou sur les deux faces (6,7) respectivement supérieure et inférieure d'une plaque de base (2) rigide en matière synthétique, une feuille (3) en matière synthétique qui est imprimée avec au moins une graduation (4) et/ou au moins un motif (5) soit sur sa face interne (8), en contact avec la face supérieure (6) ou inférieure (7) de la plaque de base (2), soit sur sa face externe (9) au contact d'un élément protecteur (11) permanent.

2. Article de traçage selon la revendication 1, **caractérisé en ce que** la graduation (4) et/ou le motif (5) est imprimé sur la face interne (8) de la feuille (3) en matière synthétique, dont la face externe (9) non imprimée se situe en surface de l'article de traçage.

3. Article de traçage selon la revendication 1 ou 2, **caractérisé en ce que**, la plaque de base (2) étant en matière transparente, la feuille imprimée (3) est rapportée contre la face inférieure (7) de la plaque de base (2).

4. Article de traçage selon la revendication 1 ou 2, **caractérisé en ce que**, la plaque de base (2) étant en matière opaque, la feuille imprimée (3) est rapportée contre la face supérieure (6) de la plaque de base (2).

5. Article de traçage selon l'une quelconque des revendications 1 à 4, **caractérisé en ce que** la feuille imprimée (3) est réalisée dans une matière synthétique de même nature chimique que celle de la plaque de base (2), sur laquelle elle est rapportée.

6. Article de traçage selon l'une des revendications 1 à 5, **caractérisé en ce qu'**une couche de vernis compatibilisant (10) est ajoutée entre la face interne (8) imprimée de la feuille (3) et la face supérieure (6) ou inférieure (7) de la plaque de base (2).

7. Article de traçage selon la revendication 1, **caractérisé en ce que** la graduation (4) et/ou le motif (5) est imprimé sur la face externe (9) de la feuille (3) en matière synthétique, la face externe (9) imprimée de cette feuille (3) étant recouverte d'un film protecteur (11) en matière synthétique d'épaisseur inférieure à celle de ladite feuille (3).

8. Article de traçage selon l'une des revendications 1 à 7, **caractérisé en ce que** la feuille (3) imprimée avec la graduation (4) et/ou les motifs (5) est réunie de façon permanente à la plaque de base (2) par une technique de surmoulage.

## Patentansprüche

1. Zeichenartikel, wie ein Lineal, Anschlagwinkel oder Winkelmesser, der im Wesentlichen aus einem synthetischen Material gefertigt ist, und aufgedruckte Elemente, wie eine Graduierung (4) und/ oder Motive (5) zu dekorativen oder zu Werbezwecken oder anderen umfasst, **dadurch gekennzeichnet, dass** er eine auf zumindest einem Teil einer Seite oder auf den beiden Seiten, jeweils oben und unten (6, 7), einer starren Grundplatte (2) aus synthetischem Material in permanenter Form beigebrachte Folie (3) aus synthetischem Material umfasst, die entweder auf ihrer Innenseite (8), die in Kontakt mit der Oberseite (6) oder Unterseite (7) der Grundplatte (2) steht, mit zumindest einer Graduierung (4) und/ oder einem Motiv (5) bedruckt ist, oder auf ihrer Außenseite (9), die mit einem permanenten Schutzelement (11) in Kontakt steht.

2. Zeichenartikel nach Anspruch 1, **dadurch gekennzeichnet, dass** die Graduierung (4) und/ oder das Motiv (5) auf der Innenseite (8) der Folie (3) aus synthetischem Material aufgedruckt ist, deren nicht bedruckte Außenseite (9) sich an der Oberfläche des Zeichenartikels befindet.

3. Zeichenartikel nach Anspruch 1 oder 2, **dadurch gekennzeichnet, dass** die bedruckte Folie (3), da die Grundplatte (2) aus einem transparenten Material gefertigt ist, an der Innenseite (7) der Grundplatte (2) angebracht wird.

4. Zeichenartikel nach Anspruch 1 oder 2, **dadurch gekennzeichnet, dass** die bedruckte Folie (3), da die Grundplatte (2) aus einem undurchsichtigen Material gefertigt ist, an der Oberseite (6) der Grundplatte (2) angebracht wird.

5. Zeichenartikel nach irgendeinem der Ansprüche 1 bis 4, **dadurch gekennzeichnet, dass** die bedruckte Folie (3) aus einem synthetischen Material mit derselben chemischen Eigenschaft wie jene der Grundplatte (2) gefertigt ist, auf der sie angebracht wird.

6. Zeichenartikel nach einem der Ansprüche 1 bis 5, **dadurch gekennzeichnet, dass** eine kompatibilisierende Klarlackschicht (10) zwischen der bedruckten Innenseite (8) der Folie (3) und der Oberseite (6) oder Unterseite (7) der Grundplatte (2) hinzugefügt wird.

7. Zeichenartikel nach Anspruch 1, **dadurch gekennzeichnet, dass** die Graduierung (4) und/ oder das Motiv (5) auf die Außenseite (9) der Folie (3) aus synthetischem Material gedruckt wird, wobei die bedruckte Außenseite (9) dieser Folie (3) mit einer Schutzfolie (11) aus synthetischem Material mit einer Stärke überzogen ist, die kleiner ist, als jene der besagten Folie (3).

8. Zeichenartikel nach einem der Ansprüche 1 bis 7, **dadurch gekennzeichnet, dass** die mit der Graduierung (4) und/ oder den Motiven (5) bedruckte Folie (3) durch eine Aufschmelztechnik in permanenter Form mit der Grundplatte (2) verbunden wird.

## Claims

1. A scribing item, such as a ruler, a set square or a protractor, substantially made of synthetic material, and including printed elements such as graduation (4) and/or patterns (5) for decoration, advertising or other purposes, **characterized in that** it comprises a synthetic material sheet (3) permanently attached on at least a portion of one face or on respectively upper and lower both faces (6, 7) of a stiff base plate (2) made of synthetic material, which synthetic material sheet (3) is printed with at least one graduation (4) and/or at least one pattern (5) either on its internal face (8) in contact with the upper (6) or lower (7) face of the base plate (2), or on its external face (9) in contact with a permanent protective element (11).

2. The scribing item according to claim 1, **characterized in that** the graduation (4) and/or the pattern (5) is/are printed on the internal face (8) of the synthetic material sheet (3), whose not printed external face (9) is located on the surface of the scribing item.

3. The scribing item according to claim 1 or 2, **characterized in that** the base plate (2) being made of transparent material, the printed sheet (3) is attached against the lower face (7) of the base plate (2).

4. The scribing item according to claim 1 or 2, **characterized in that**, since the base plate (2) is made of opaque material, the printed sheet (3) is attached against the upper face (6) of the base plate (2).

5. The scribing item according to any one of claims 1 to 4, **characterized in that** the printed sheet (3) is made in a synthetic material of a same chemical nature as that of the base plate (2), on which it is attached.

6. The scribing item according to any of claims 1 to 5, **characterized in that** a layer of compatibilizer varnish (10) is added between the printed internal face (8) of the sheet (3) and the upper (6) or lower (7) face of the base plate (2).

7. The scribing item according to claim 1, **characterized in that** the graduation (4) and/or the pattern (5) is printed on the external face (9) of the synthetic material sheet (3), the printed external face (9) of this sheet (3) being covered with a synthetic material protective film (11) of a thickness lower than that of said sheet (3).

8. The scribing item according to any of claims 1 to 7, **characterized in that** the printed sheet (3) with the graduation (4) and/or the patterns (5) is permanently joined to the base plate (2) by an over-molding technique.
